# EUROPÄISCHE PATENTSCHRIFT

(11) **EP 1 264 269 B1**
(45) Veröffentlichungstag und Bekanntmachung des Hinweises auf die Patenterteilung: **13.07.2005**
(21) Anmeldenummer: 01913590.4
(22) Anmeldetag: 07.02.2001
(51) Int. Cl.: G06K 9/20, A61B 5/117, G06K 9/00

(54) **SCHALTUNGSANORDNUNG UND VERFAHREN ZUM BETRIEB EINES FINGERABDRUCKSENSORS**
CIRCUIT ARRANGEMENT AND METHOD FOR OPERATING A FINGERPRINT SENSOR
CIRCUIT ET PROCEDE POUR L'EXPLOITATION D'UN DETECTEUR D'EMPREINTES DIGITALES

(30) Priorität: 09.02.2000 DE 10005617
(43) Veröffentlichungstag der Anmeldung: 11.12.2002
(73) Patentinhaber: Infineon Technologies AG, 81669 München (DE)
(72) Erfinder: BASSE, VON, Paul-Werner, 82515 Wolfratshausen (DE); MARKSTEINER, Stephan, 85579 Neubiberg (DE)
(74) Vertreter: Epping Hermann & Fischer
(86) Internationale Anmeldenummer: PCT/DE2001/000475
(87) Internationale Veröffentlichungsnummer: WO 2001/059693

(56) Entgegenhaltungen:
- EP-A- 0 372 748
- WO-A-99/26187

## Beschreibung

Bei Fingerabdrucksensoren ist üblicherweise eine rasterformige Anordnung von einzelnen Sensorelementen, die den Punkten des zu erfassenden Bildes zugeordnet sind, in einer Ebene vorhanden, und daran sind elektronische Schaltungskomponenten zur Ermittlung eines Signales angeschlossen. Die einzelnen Sensorelemente, die z.B. für kapazitive Messung eingerichtet sind, werden der Reihe nach angesteuert, was im Fall eines Rechteckrasters und somit einer matrizenartigen Anordnung der Bildpunkte zeilenweise oder spaltenweise geschehen kann. Bisher wird ein Fingerabdrucksensor standig neu gestartet und liefert nach jedem Start ein komplettes Fingerabdruckbild. Das geschieht unabhangig davon, wie kontrastreich das erzeugte Bild ausfallt. Es werden insbesondere auch dann Fingerabdruckbilder geliefert, wenn der Finger noch nicht richtig auf der Auflagefläche des Sensors aufliegt. Wünschenswert ware dagegen eine Betriebsmoglichkeit fur den Sensor, bei der sichergestellt ist, dass vollstandige Fingerabdruckbilder nur dann geliefert werden, wenn ein Finger so auf der Auflageflache aufliegt, dass ein deutliches und kontrastreiches Bild produziert werden kann.

Die WO99/26187 lehrt, zur Kontrasterhöhung mehrfach Fingerabdruckbilder bei unterschiedlichen Sensoreinstellungen aufzunehmen, solange bis die aufgenommene Minimalintensität auf Null abgebildet wird und der dynamische Bereich maximal wird.

Aufgabe der vorliegenden Erfindung ist es, eine Moglichkeit anzugeben, wie mit einem Fingerabdrucksensor stets ausreichend kontrastreiche Bilder bei Aufliegen eines Fingers produziert werden konnen.

Diese Aufgabe wird mit der Schaltungsanordnung mit den Merkmalen des Anspruches 1 bzw. mit dem Verfahren mit den Merkmalen des Anspruches 2 gelöst. Ausgestaltungen ergeben sich aus den anhangigen Anspruchen.

Die erfindungsgemäße Schaltungsanordnung bzw. das erfindungsgemaße Betriebsverfahren fur einen Fingerabdrucksensor stellt sicher, dass der Fingerabdrucksensor automatisch gestartet wird, wenn ein Finger so aufliegt, dass ein ausreichend kontrastreiches Bild produziert werden kann. Das wird dadurch erreicht, dass Probedurchlaufe durchgefuhrt werden, bei denen nur ein Teil der Bildpunkte berucksichtigt wird, und anhand der ermittelten Sensorsignale festgestellt wird, ob ein ausreichender Kontrast erzielbar ist. Die erfindungsgemäße Schaltungsanordnung erzeugt zu diesem Zweck die Differenz zwischen einem maximalen und einem minimalen Wert der Sensorsignale z.B. langs einer Spalte oder Zeile einer matrizenartigen Anordnung von Bildpunkten. Falls diese Differenz ausreichend groß ist, was fur einen ausreichenden Kontrast eines zu erzeugenden Bildes spricht, wird der normale Abtastvorgang des Fingerabdrucksensors, mit dem vollständige Fingerabdruckbilder erzeugt werden, gestartet. Damit wird sichergestellt, dass die erzeugten vollstandigen Fingerabdruckbilder eine ausreichende Qualitat besitzen.

Das erfindungsgemäße Verfahren sieht dementsprechend vor, Kontraste innerhalb einer vorab ausgewählten Gruppe von Bildpunkten zu ermitteln und bei ausreichendem Kontrast eine Erzeugung eines vollstandigen Fingerabdruckbildes zu initiieren.

Es folgt eine genauere Beschreibung eines Ausführungsbeispiels der Schaltungsanordnung bzw. des Verfahrens anhand der beigefügten Figuren.
Figur 1 zeigt in Draufsicht ein Schema einer matrizenartigen Anordnung von Sensorelementen.
Figur 2 zeigt ein Schema für eine erfindungsgemaße Schaltungsanordnung.

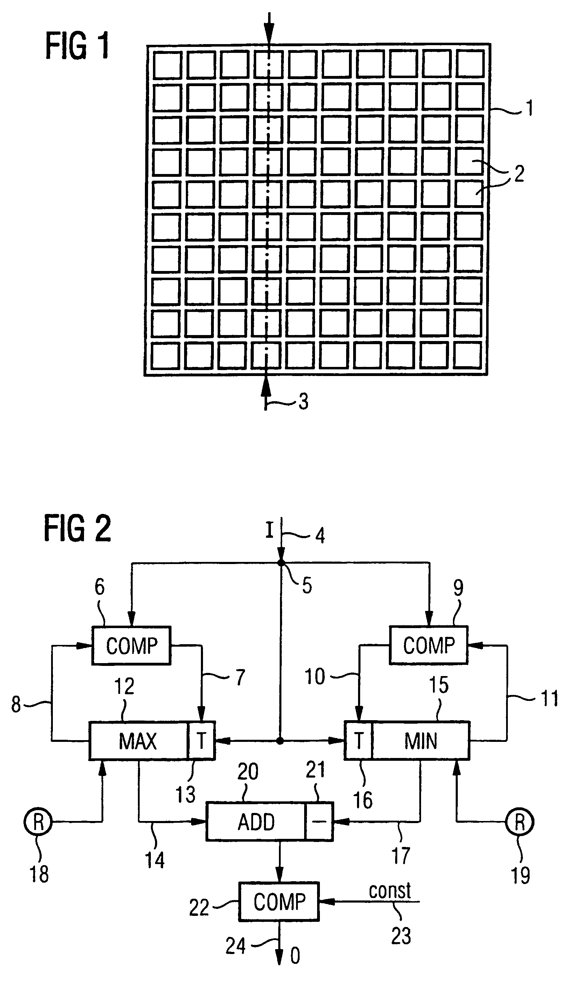

In Figur 1 ist eine rasterformige Anordnung im Schema einer Matrix für die Sensorelemente eines Fingerabdrucksensors dargestellt. Sensorflächen 2 fur die einzelnen Bildpunkte befinden sich innerhalb eines als Auflageflache 1 fur einen Finger vorgesehenen Bereiches. Mit einer gestrichelten Linie und zwei Pfeilen 3 ist eine Spalte von Bildpunkten dieser Matrix herausgehoben. Bei einem bevorzugten Ausführungsbeispiel der erfindungsgemaßen Schaltungsanordnung bzw. des erfindungsgemaßen Verfahrens werden langs einer solchen Spalte in aufeinanderfolgenden Durchgangen jeweils die Sensorsignale der Sensorelemente dieser Spalte ermittelt. Die in einem Durchgang auftretenden maximalen und minimalen Werte liefern ein Maß für den erzielbaren Kontrast. Überschreitet die Differenz der maximalen und minimalen Werte einen je nach Ausführung des Fingerabdrucksensors bzw. Verfahrens vorgegebenen festen Wert, wird die Ansteuerung der Sensorelemente so geandert, dass nicht mehr nur Signale einer einzelnen Spalte, sondern ein gesamtes Fingerabdruckbild erzeugt wird.

Die einzelnen Sensorsignale der jeweiligs in dieser Form ausgewerteten Bildpunkte werden in derselben Weise erzeugt wie bei der Aufnahme des gesamten Fingerabdruckbildes. Die Reihenfolge der Ansteuerung wird erfindungsgemaß gegenüber der Reihenfolge bei der Aufnahme eines gesamten Bildes so geandert, dass jeweils nur die Bildpunkte einer Zeile, Spalte, Diagonalen oder einer ähnlichen ausgewahlten Gruppe von Bildpunkten erfasst und deren Sensorsignale ausgewertet werden. Die dafur vorgesehene Ansteuerschaltung kann abgesehen von dieser zusätzlich vorgebbaren Ansteuerreihenfolge ansonsten in der fur Fingerabdrucksensoren an sich bekannten Weise ausgefuhrt sein.

Figur 2 zeigt eine bevorzugte Ausgestaltung einer erfindungsgemäßen Schaltungsanordnung, mit der das erfindungsgemäße Verfahren ausgeführt werden kann. Ein zu einem jeweiligen Bildpunkt jeweils ermitteltes Sensorsignal gelangt an den Eingang 4 der Schaltung. Dort befindet sich ein Schaltungsknoten 5, mit dem das Signal zwei Vergleichsgliedern 6, 9 zugeführt wird. In diesen Vergleichsgliedern wird jeweils festgestellt, ob das aktuelle Sensorsignal großer oder kleiner als der abgespeicherte maximale bzw. minimale Wert ist. Diese gespeicherten Werte befinden sich in einem ersten und zweiten Speicherregister 12, 15. Der dort gespeicherte Wert wird uber Leitungen 8, 11 den Vergleichgliedern zugefuhrt und dort mit dem aktuellen Sensorsignal verglichen. Falls festgestellt wird, dass das aktuelle Sensorsignal z.B. großer ist als der abgespeicherte maximale Wert, dann wird mittels des ersten Vergleichsgliedes 6, das in dem Schaltungsdiagramm der Figur 2 auf der linken Seite eingezeichnet ist, über eine zugehörige erste Steuerleitung 7, die zu einer ersten Tor-Schaltung 13 führt, veranlasst, dass das aktuelle Signal, das uber den Knoten 5 den vorhandenen Tor-Schaltungen 13, 16 zugefuhrt wird, in das erste Speicherregister 12 übernommen wird. Entsprechend verfugt das zweite Vergleichsglied 9 uber eine zweite Steuerleitung 10 und eine zweite Tor-Schaltung 16. Hier wird der jeweils aktuelle minimale Wert abgespeichert.

Über nachfolgende Leitungen 14, 17 werden die gespeicherten Werte jeweils einem Subtraktionsglied 20, 21 zugefuhrt, das z.B., wie in der Zeichnung angedeutet, ein Addierglied sein kann, dem auf der Seite des fur den minimalen Wert vorgesehenen zweiten Speicherregisters 15 ein Umkehrglied 21 fur das Vorzeichen vorgeschaltet ist. Die Differenz, die in dem Subtraktionsglied erzeugt wird, wird einem dritten Vergleichsglied 22 zugefuhrt, in dem diese Differenz mit einem bestimmten vorgegebenen Signalpegel 23 verglichen wird. Am Ausgang 24 wird ein Steuersignal ausgegeben, mit dem eine vollstandige Erzeugung eines Fingerabdruckbildes initiiert wird, sowie die Differenz von maximalem und minimalem Wert den konstant vorgegebenen Wert übersteigt. Fur jeweilige nachfolgende Durchgänge sind Schaltungsteile 18, 19 vorhanden, mit denen die Inhalte der Speicherregister zuruckgesetzt bzw. geloscht werden. Es werden so die minimalen und maximalen Werte immer nur jeweils fur einen Durchgang erfasst, d.h. fur jeweils genau eine Abfrage der Sensorsignale langs einer Spalte oder Zeile.

Die ausgewerteten Bildpunkte brauchen nicht längs einer Reihe zu liegen, sondern z.B. in demjenigen Bereich der Sensorflache, in dem das erfindungsgemäße Verfahren die besten Ergebnisse liefert. Das kann ein kleiner Ausschnitt in der Mitte der Sensorfläche sein. Durch die Auswahl der erfindungsgemaß zu erfassenden Bildpunkte kann das Verfahren an die jeweiligen Gegebenheiten und Erfordernisse angepasst werden.

## Patentansprüche

1. Fingerabdrucksensor mit einer Schaltungsanordnung, bei der eine Schaltung zur Erfassung von Sensorsignalen einzelner Bildpunkte und zur Steuerung einer Reihenfolge, in der die Sensorsignale erfasst werden, vorhanden ist,
**dadurch gekennzeichnet, dass**
als weitere Schaltungsteile vorhanden sind
ein erstes Vergleichsglied (6), das ermittelt, ob ein zugeführtes Sensorsignal größer ist als ein gespeicherter erster Wert,
ein zweites Vergleichsglied (9), das ermittelt, ob ein zugeführtes Sensorsignal kleiner ist als ein gespeicherter zweiter Wert,
ein erstes Speicherregister (12), in dem der erste Wert gespeichert wird,
ein zweites Speicherregister (15), in dem der zweite Wert gespeichert wird,
eine erste Tor-Schaltung (13), die veranlasst, dass bei Auftreten eines großeren Wertes als des in dem ersten Speicherregister gespeicherten Wertes dieser größere Wert gespeichert wird,
eine zweite Tor-Schaltung (16), die veranlasst, dass bei Auftreten eines kleineren Wertes als des in dem zweiten Speicherregister gespeicherten Wertes dieser kleinere Wert gespeichert wird,
ein Subtrahierglied (20, 21), in dem die Differenz zwischen den in den Speicherregistern (12, 15) gespeicherten Werten gebildet wird, und
ein drittes Vergleichsglied (22), in dem diese Differenz mit einem vorgegebenen Wert verglichen wird und im Fall, dass die Differenz größer als der vorgegebene Wert ist, eine Erzeugung eines Fingerabdruckbildes initiiert wird.

2. Verfahren zum Betrieb eines Fingerabdrucksensors, bei dem
a) für eine vorab ausgewahlte Gruppe von Bildpunkten zu jedem dieser Bildpunkte ein Sensorsignal erzeugt wird,
b) ein maximaler und ein minimaler Wert dieser Sensorsignale ermittelt werden,
c) die Schritte a und b in wiederholten Durchgangen durchgefuhrt werden, wobei in Schritt b nur Werte eines gerade erfolgenden Durchganges berucksichtigt werden, und
d) bei Auftreten einer Differenz zwischen maximalem und minimalem Wert, die einen vorgegebenen Wert überschreitet, eine Erzeugung eines Fingerabdruckbildes initiiert wird.

3. Verfahren nach Anspruch 2, bei dem
in Schritt a die Sensorsignale zu den Bildpunkten jeweils in einer fest vorgegebenen Reihenfolge ermittelt werden und
in Schritt b ein jeweils aktueller maximaler Wert und ein jeweils aktueller minimaler Wert gespeichert werden, jedes neu ermittelte Sensorsignal mit den gespeicherten Werten verglichen wird und bei Uberschreiten bzw. Unterschreiten eines der gespeicherten Werte das aktuelle Sensorsignal den betreffenden Wert ersetzend gespeichert wird.

4. Verfahren nach Anspruch 3, bei dem
in Schritt a für eine matrizenartige Anordnung von Bildpunkten die Sensorsignale zu Bildpunkten einer Zeile, Spalte oder Diagonalen in einer Reihenfolge entsprechend der Anordnung der Bildpunkte in der betreffenden Zeile, Spalte bzw. Diagonalen ermittelt werden.

## Claims

1. Fingerprint sensor having a circuit arrangement, in the case of which a circuit is present for detecting sensor signals of individual pixels and for controlling a sequence in which the sensor signals are detected, **characterized in that** present as further circuit parts are
a first comparing element (6) that determines whether a supplied sensor signal is greater than a stored first value,
a second comparing element (9), that determines whether the supplied sensor signal is smaller than a stored second value,
a first memory register (12), in which the first value is stored,
a second memory register (15), in which the second value is stored,
the first gate circuit (13) that, in the event of the occurrence of a larger value than the value stored in the first memory register, causes this larger value to be stored,
a second gate circuit (16), that, in the event of the occurrence of a smaller value than the value stored in the second memory register, causes this smaller value to be stored,
a subtracting element (20, 21), in which the difference between the values stored in the memory registers (12, 15) is formed, and
a third comparing element (22), in which this difference is compared with a prescribed value, and the production of a fingerprint image is initiated in the case when the difference is greater than the prescribed value.

2. Method for operating a fingerprint sensor, in the case of which
a) a sensor signal is generated for each of the pixels of a previously selected group of pixels,
b) a maximum and a minimum value of these sensor signals are determined,
c) the steps a and b are carried out in repeated runs, account being taken in step b only of values of the run just performed, and
d) the production of a fingerprint image is initiated upon the occurrence of a difference between maximum and minimum values that overshot a prescribed value.

3. Method according to Claim 2, in which in step a the sensor signals relating to the pixels are determined in each case in a permanently prescribed sequence, and in step b the respective current maximum value and the respective current minimum value are stored, each newly determined sensor signal is compared with the stored values, and in the event of undershooting or overshooting of one of the stored values the current sensor signal is stored in a fashion replacing the relevant value.

4. Method according to Claim 3, in which in step a there are determined for a matrix-like array of pixels the sensor signals relating to pixels of a row, column or diagonal in a sequence corresponding to the arrangement of the pixels in the relevant row, column or diagonal.

## Revendications

1. Montage comportant un détecteur d'empreintes digitales, dans lequel est présent un circuit pour détecter des signaux de détecteur de points d'image individuels et pour commander une séquence suivant laquelle les signaux de détecteur sont détectés,
**caractérisé en ce que**
il est présent comme partie de circuit supplémentaire
un premier élément (6) comparateur, qui détermine si un signal de détecteur envoyé est plus grand qu'une première valeur mise en mémoire,
un deuxième élément (9) comparateur, qui détermine si un signal de détecteur envoyé est plus petit qu'une deuxième valeur mise en mémoire,
un premier registre (12) de mémoire, dans lequel est enregistrée la première valeur,
un deuxième registre (15) de mémoire, dans lequel est enregistrée la deuxième valeur,
un premier circuit (13) porte, qui fait que, lors de l'apparition d'une valeur plus grande que la valeur mise en mémoire dans le premier registre de mémoire, cette valeur plus grande est mise en mémoire,
un deuxième circuit (16) porte, qui fait que, lors de l'apparition d'une plus petite valeur que la valeur qui est mise en mémoire dans le deuxième registre de mémoire, cette valeur plus petite est mise en mémoire,
un élément (20, 21) de soustraction, dans lequel il est formé la différence entre les valeurs mises en mémoire dans les registres (12, 15) de mémoire, et
un troisième élément (22) comparateur, dans lequel cette différence est comparée à une valeur prescrite et, dans le cas où cette différence est plus grande que la valeur prescrite, il est initié une production d'une image d'empreintes digitales.

2. Procédé pour faire fonctionner un détecteur d'empreintes digitales, dans lequel
a) pour un groupe de points d'image sélectionnés à l'avance, on produit un signal de détecteur par rapport à chacun de ces points d'image,
b) on détermine une valeur maximale et une valeur minimale de ces signaux de détecteur,
c) on réalise les étapes a et b lors de passages répétés, seules des valeurs d'un passage qui vient d'être effectué étant pris en compte à l'étape b, et
d) en cas d'apparition d'une différence entre valeurs maximale et minimale qui est supérieure à une valeur prescrite, on initie une production d'une image d'empreintes digitales.

3. Procédé suivant la revendication 2, dans lequel
on détermine à l'étape a les signaux de détecteur par rapport aux points d'image chaque fois suivant une séquence prévue à l'avance de manière fixe et on met en mémoire à l'étape b une valeur maximale du moment et une valeur minimale du moment, on compare chaque signal de détecteur nouvellement déterminé aux valeurs mises en mémoire et, dans le cas où l'on est au-dessus ou en dessous de l'une des valeurs mises en mémoire, on met en mémoire le signal de détecteur du moment en remplacement de la valeur concernée.

4. Procédé suivant la revendication 3, dans lequel
on détermine à l'étape a, pour une disposition du genre d'une matrice de points d'image, les signaux de détecteur par rapport à des points d'image d'une ligne, colonne ou diagonale suivant une séquence correspondant à la disposition des points d'image dans la ligne, colonne ou diagonale concernée.
